# EUROPEAN PATENT APPLICATION

(11) **EP 3 772 551 A1**
(43) Date of publication of application: **10.02.2021**
(21) Application number: 20188555.5
(22) Date of filing: 30.07.2020
(51) Int. Cl.: D21F 1/44

(54) **METHOD AND APPARATUS FOR MANUFACTURING WATERMARKED PAPER AND PROCESSING LINE FOR FORMING A CYLINDER MOULD COVER**

(30) Priority: 06.08.2019 IT 201900014103
(71) Applicant: Fedrigoni S.p.A., 37135 Verona (IT)
(72) Inventor: PALLOTTA, Pasquale, 60044 FABRIANO AN (IT); BURATTINI, Gianluca, 60044 FABRIANO AN (IT)
(74) Representative: Modiano, Micaela Nadia

(57) **Abstract**

A method for manufacturing watermarked paper (10), comprising at least one watermark constituted by one or more light regions (13, 13', 13", 13'") which have a lower density of fibers (11) and one or more dark regions (14, 14', 14") which have a higher density of fibers (11), by way of at least one mould cylinder covered with a mould cover (2) which is adapted to modulate the density of fibers (11) that are deposited on the mould cylinder, which comprises:
- a step of forming the mould cover (2), in which one or more light areas (3, 3', 3", 3'") adapted to produce the light regions (13, 13', 13", 13'") in the paper and one or more dark areas (4, 4', 4") adapted to produce the dark regions (14, 14', 14") in the paper are produced in the mould cover (2);
- a step of deposition, in which the fibers are deposited on the mould cylinder covered with the mould cover (2) so as to provide the watermarked paper (10).

One or more light areas (3, 3', 3", 3"') are provided by locally modifying the permeability of the mould cover (2) by way of an additive process through which material is added to a plurality of wires (9) of the mould cover (2), thus reducing the size of a plurality of voids (8) that are defined between the plurality of wires (9).

## Description

The present invention relates to a method and an apparatus for manufacturing watermarked paper, which is useful and practical particularly in the field of the paper industry.

As is known, watermarked papers are papers that comprise one or more watermarks, i.e. designs, wordings, emblems or the like, which are visible in transparency (i.e. when looking at the paper with light passing through it).

The watermark is constituted by light regions, which are more transparent in visible light, and dark regions, which are less transparent in visible light.

The light regions and the dark regions of the watermark are provided in practice by varying the density of the fibers in the paper: where the density is higher, there are dark regions and where the density of fibers is lower, there are light regions. Using this characteristic, it is possible to create complex images with a light and shade effect.

Nowadays watermarked papers are normally used for high-quality paper and bond paper, and particularly for bank notes, in order to make the forgery of these papers more difficult.

The process for providing watermarked paper in a machine for producing bank notes (commonly known as a "mould machine") using a forming cylinder (known as a "mould cylinder") has been known for years.

In this conventional process, the paper is formed on the mould cylinder, which is covered by a metal mesh ("mould cover"), commonly known as a watermarking mesh or web (hereinafter simply "mould cover"). In more detail, the mould cylinder is immersed and turns in a tank (or vat) filled with a suspension of water and paper fibers. The water is drained through the mould cover and the fibers remain on its surface.

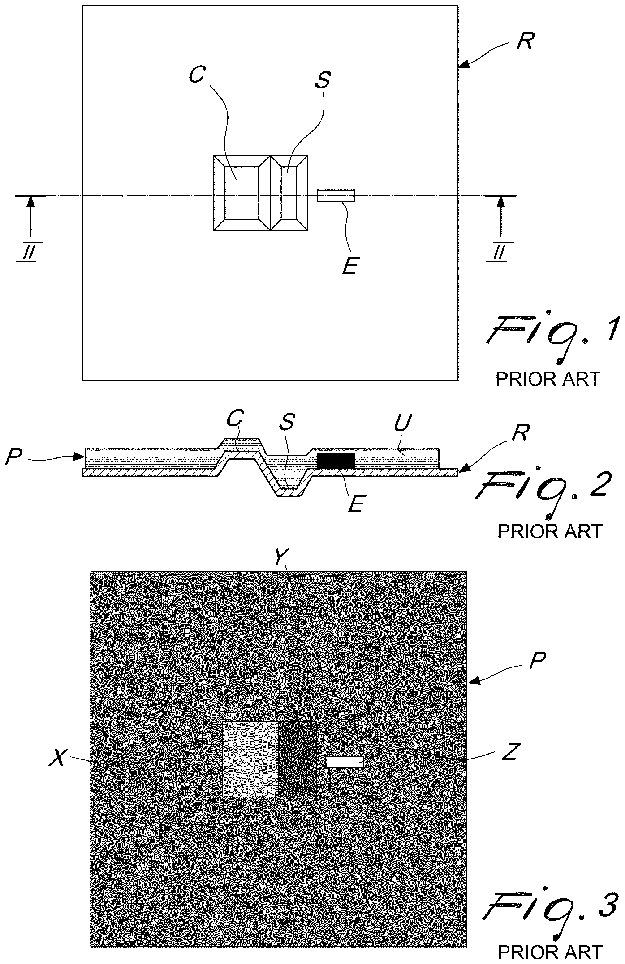

According to the known art, with reference to Figures 1-3, the creation of zones Y with a higher density of fibers (dark regions) and of zones X with a lower density of fibers (light regions) during this process of deposition of the fibers U on the mould cylinder, and therefore the watermark effect, is obtained by first modifying the geometry of the mould cover R using a method of mechanical deformation, typically a method of die punching known as embossing.

In more detail, the image that it is desired to obtain in the watermark is projected in 3D and created using numerically controlled machines on male/female molds made of metallic material which, installed on a die punching machine, are used to deform the mould cover R, for example as shown in Figure 1 and 2. In this manner, in the mould cover R, mechanical deformation creates zones in relief C (i.e. protuberances) and hollows S (i.e. concavities) with respect to the non-deformed surface of the mould cover R.

When the mould cover R thus deformed is applied on the mould cylinder, during the process of deposition of the paper fibers U, the zones in relief ensure that the water, which acts as a vehicle to convey the fibers U, flows toward the hollows S. In this manner variations are obtained of the quantity of fibers U corresponding to the deformed zones C, S, with consequent variation of the density of the paper: light regions X are created at the zones in relief C in the paper P, and dark regions Y are created at the hollows S. The resulting chromatic contrast is proportional to the height difference between hollow S and relief C.

The conventional method described above, although useful and practical, presents some limitations and drawbacks.

In particular, the process of mechanical deformation causes a stress on the wires of the mould cover owing to the lengthening that they need to undergo.

Furthermore, the zones in relief are subject to abrasion and wear during the process of formation of the paper, which limits the life of the mould cover.

Another aspect which can be improved in the known art described above consists in that the maximum contrast that can be achieved is limited by the limit of elongation at break of the wires that make up the mould cover.

Another known method for creating light regions consists of welding or stitching a completely impermeable element E (commonly known as an "e-type") on the mould cover, typically depicting a logo or a number, which totally prevents the water from draining and completely cancels permeability in the region where it is applied.

In the region where the impermeable element E is applied, owing to the impermeability of the element, the sheet of paper will be formed with a minimal density of fibers, making it possible to form a watermark Z that is clear and extremely visible.

It is also known that modeling an impermeable element (e-type) to adapt to the profile of an underlying mechanical deformation (concavity or relief) obtains a modulated light effect.

However, the use of impermeable elements also has some limitations, among which is the fact that a large region cannot be made light without running the risk of perforating the paper.

Furthermore, so as not to compromise the applicability and therefore the hold of the impermeable element on the mould cover, it is an extremely complex matter to weld or stitch impermeable elements of width/stroke less than 0.5-0.6 mm.

It is theoretically possible to glue or weld an impermeable element with areas of modified permeability, produced separately; however, it is practically a certainty that the areas welded or glued in order to fix such element to the metal mesh will leave visible and unwanted marks on the paper that is produced from it. Furthermore a practice of this kind would be extremely imprecise and labor-intensive.

The aim of the present invention consists of providing a method and an apparatus for manufacturing watermarked paper that solve the above technical problem, eliminate the drawbacks and overcome the limitations of the known art, by making it possible to lengthen the useful life of the mould cover.

Within this aim, an object of the present invention is to provide a method and an apparatus for manufacturing watermarked paper that make it possible to overcome the limitations of chromatic contrast and/or the limitations of the extent of light regions of the watermark, described above.

Another object of the invention consists of providing a method and an apparatus for manufacturing watermarked paper that make it possible to improve the watermark produced in one or more visible aspects or in any case to reduce defects in the watermarked paper produced.

Another object of the invention consists of providing a method and an apparatus for manufacturing watermarked paper that are easy to implement and are economically competitive when compared to the known art.

Another object of the invention is to make available an alternative to the known art.

This aim and these and other objects which will become better apparent hereinafter are achieved by a method for manufacturing watermarked paper, comprising at least one watermark constituted by one or more light regions which have a lower density of fibers and one or more dark regions which have a higher density of fibers, by way of at least one mould cylinder covered with a mould cover which comprises wires which define voids between them and which is adapted to modulate the density of fibers that are deposited on the mould cylinder, so as to produce said light regions and said dark regions in the paper, which comprises:
- a step of forming the mould cover, in which one or more light areas adapted to produce said light regions in the paper and one or more dark areas adapted to produce said dark regions in the paper are produced in said mould cover;
- a step of deposition, in which the fibers are deposited on said mould cylinder covered with said mould cover which was formed previously in said step of forming the mould cover, so as to provide said watermarked paper;
characterized in that, during said step of forming the mould cover, said one or more light areas are provided by locally modifying the permeability of the mould cover by way of an additive process through which material is added to a plurality of said wires of the mould cover, thus reducing the size of a plurality of voids that are defined between said plurality of wires.

This aim and these and other objects which will become better apparent hereinafter are also achieved by a processing line according to claim 7 and also by an apparatus according to claim 8.

Further characteristics and advantages of the invention will become better apparent from the description of some preferred, but not exclusive, embodiments of a method and an apparatus for manufacturing watermarked paper, which are illustrated by way of non-limiting example with the aid of the accompanying drawings wherein:
Figures 1, 2 and 3 are, respectively, a view from above of a mould cover, a cross-sectional view of the same mould cover taken along the line II-II during the step of deposition of the fibers, and a plan view of the paper produced by the same mould cover, according to the known art;
Figure 4 is a plan view of a first embodiment of a mould cover, according to the invention;
Figure 5 is a plan view of a sheet of paper produced with the mould cover of Figure 4;
Figure 6 is a plan view of a second embodiment of a mould cover, according to the invention;
Figure 7 is a cross-sectional view taken along the line VII-VII of the mould cover of Figure 6, during a step of deposition of the paper fibers;
Figure 8 is a plan view of a sheet of paper produced with the mould cover of Figure 6;
Figure 9 is a plan view of a third embodiment of a mould cover, according to the invention;
Figure 10 is a cross-sectional view taken along the line X-X of the mould cover of Figure 9, during a step of deposition of the paper fibers;
Figure 11 is a plan view of a sheet of paper produced with the mould cover of Figure 9;
Figure 12 is a plan view of a fourth embodiment of a mould cover, according to the invention;
Figure 13 is a cross-sectional view taken along the line IV-IV of the mould cover of Figure 12, during a step of deposition of the paper fibers;
Figure 14 is a plan view of a sheet of paper produced with the mould cover of Figure 12.

With reference to the figures, the method is aimed at the production of watermarked paper 10, that is to say a paper that comprises at least one watermark that is constituted by one or more light regions 13, 13', 13" that have a lower density of fibers 11 and one or more dark regions 14, 14', 14" that have a higher density of fibers 11.

Similarly to the known art, the method entails providing the watermarked paper 10 by way of at least one mould cylinder (not shown) which is covered with a watermarking web or mesh 2 (hereinafter simply "mould cover 2").

The mould cover 2 comprises, in a known manner, wires 9 which define voids 8 between them (that is to say, the wires 9 in practice form the meshes of the mould cover 2). The mould cover 2 is preferably metallic.

The term wire 9 therefore means, in completely general terms, any element or portion of mould cover 2 - transverse, longitudinal or oblique - that is separated from another, equivalent element by a void 8. In practice the voids 8 serve to drain the water during the process of depositing the fibers 11 on the mould cylinder.

The mould cover 2 is therefore adapted to modulate the density of fibers 11 that are deposited on the mould cylinder, i.e. to produce different densities or thicknesses of fibers 11 in different zones of the paper 10, so as to produce the light regions 13, 13', 13", 13''' and the dark regions 14, 14', 14" in the paper 10.

To this end the method comprises a step of forming the mould cover 2, in which one or more light areas 3, 3', 3", 3'" adapted to produce the above mentioned light regions 13, 13', 13", 13''' in the paper 10 and one or more dark areas 4, 4', 4" adapted to produce the above mentioned dark regions 14, 14', 14" in the paper 10 are produced in the mould cover 2.

The light areas 3, 3', 3", 3''' are in practice the areas of the mould cover 2 where, in the subsequent step of deposition, a lower density (i.e. quantity a per unit of surface area) of fibers 11 is deposited, and the dark areas 4, 4', 4" are the areas of the mould cover 2 where, in the subsequent step of deposition, a higher density (i.e. quantity per unit of surface area) of fibers 11 is deposited.

Similarly to the known art, after the step of forming the mould cover 2, this is conveniently fixed, in a known manner, to the mould cylinder and then the step of deposition is carried out, in which the paper fibers 11 are deposited on the mould cylinder covered with the mould cover 2 which was formed previously, so as to provide the watermarked paper 10. More precisely, the paper fibers 11 are deposited on the outer surface of the mould cover 2, while this is fixed to the outer surface of the mould cylinder.

In more detail, in the step of deposition, as in the known art, the mould cylinder is immersed and rotates in a tank (or vat) filled with a suspension of water and paper fibers 11; the water is drained through the mould cover 2 (by passing through the voids 8 defined between the wires 9) and the fibers 11 remain on the surface of this, with different densities at the light areas 3, 3', 3", 3'" and at the dark areas 4, 4', 4" of the mould cover 2, thus forming the watermarked paper 10. The mould cylinder, the tank and the details of the step of deposition are not illustrated as they are conventional.

According to the invention, during the step of forming the mould cover 2, the one or more light areas 3, 3', 3", 3''' are provided by locally modifying the permeability of the mould cover 2 by way of an additive process through which material (preferably one or more layers of material) is added to a plurality of (conveniently selected) wires 9 of the mould cover 2, thus reducing the size of the voids 8 that are defined between such wires 9 (that is to say reducing the exposed surface, i.e. the hole, between the wires 9 and thus making some meshes narrower).

More precisely, the material is added to a limited portion of the wires 9, so as to create a light area 3 of predetermined dimensions and shape, according to the watermark that it is desired to obtain.

The additive process referred to is any of the additive processes known to the art, that is to say one of the methods that is known also as "additive productions" or "additive technologies" or "additive techniques" or "layered production".

As is known, these additive processes referred to are automated procedures for joining materials, which are normally used to fabricate or modify objects from computerized 3D models, usually by adding one layer of material on another, such as for example Fused Deposition Modeling or laser sintering or, more generally, all methods of 3D printing.

In more detail, in the preferred embodiments of the method, the additive process comprises a 3D printing method with which one or more layers of material are added to an adapted plurality of wires 9 (or rather to suitable portions of such wires 9) of the mould cover 2.

More generally, the additive process can comprise for example one or more of the following conventional additive processes, chosen according to requirements:
- DMLS (Direct Metal Laser Sintering), in particular for sintering metal in granular form;
- SLM (Selective Laser Melting), in particular for deposition by melting metals such as alloys of titanium, alloys of cobalt/chromium, stainless steel, aluminum;

- SLS (Selective Laser Sintering), in particular for deposition by sintering thermoplastic materials, or metallic powders, or ceramic powders;
- metal sintering by EBM (Electron Beam Melting), in particular for deposition by melting metallic alloys;
- sintering of thermoplastic powders using heat, also known as SHS (Selective Heat Sintering);
- extrusion of materials, in particular filament extrusion, a method also known as FFF (Fused Filament Fabrication) and also as FDM (Fused Deposition Modeling);
- polymerization using light, i.e. deposition of photopolymers such as for example resins, and in particular stereolithography or SLA, also known as DLP (Digital Light Processing);
- the process known as Multi-Jet Modeling;
- deposition of liquid photopolymers, that is to say the technology known as PolyJet;
or any other conventional additive process.

The material that is added using the additive process is any of the materials that are adapted to be used in the above mentioned conventional additive processes, such as for example metal (in particular alloys of metal), polymers, resins, thermoplastic materials in general, ceramics etc.

Advantageously, by increasing the quantity of material deposited on the wires 9 of the mould cover 2 it is possible to vary the size of the voids 8 between such wires 9 and consequently the permeability of the mould cover 2 limited to the region that is subjected to the additive process (the permeability is inversely proportional to the material deposited, since this increases the thickness of the wires 9 and consequently reduces the voids 8).

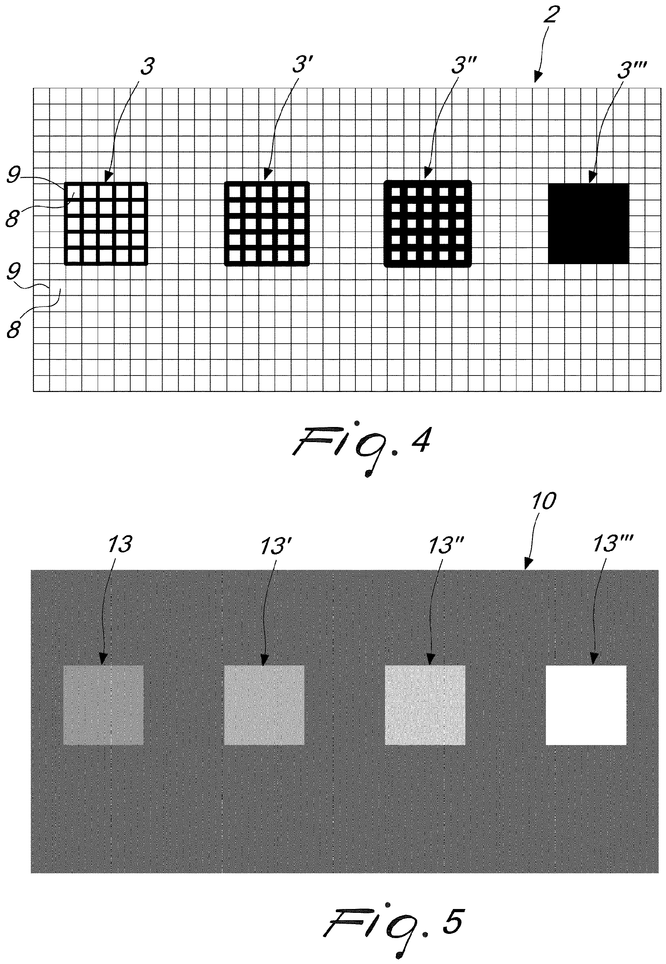

By way of example, Figure 4 shows a mould cover 2 in which an additive process has been used to provide a series of light areas 3, 3', 3", 3''' of decreasing permeability (from left to right in the figure) and Figure 5 shows a sheet of paper 10 obtained using such mould cover 2 of Figure 4; with reference to these figures it should be noted that: a first light area 3 in the mould cover 2 produces a first light region 13 in the sheet of paper 10; a second light area 3' in the mould cover 2, with less permeability than the first light area 3, produces a second light region 13' in the sheet 10, which is lighter (i.e. more transparent to light) than the first light region 13; a third light area 3" in the mould cover 2, with less permeability than the second light area 3', produces a third light region 13" in the sheet 10, which is lighter than the second light region 13'; and a fourth light area 3''' in the mould cover 2, with less permeability than the third light area 3", produces a fourth light region 13''' in the sheet 10, which is lighter than the third light region 13".

Each light area 3, 3', 3", 3''' produces a respective light region 13, 13', 13", 13''' of corresponding shape and size in the sheet 10.

It is therefore possible to provide light areas 3, 3', 3", 3'" in the mould cover 2 that have any shape, size and permeability in order to produce respective light regions 13, 13', 13", 13" in the sheet of paper 10 that have desired dimensions, shape and contrast.

The contrast, in particular, can be higher than that obtainable with mechanical deformation according to the known art, in that it is possible to produce light regions 13''' with substantially zero permeability.

Optionally, in some embodiments, in the step of forming the mould cover 2, one or more impermeable elements 7 (for example elements known as "e-type") are also fixed to the mould cover 2 so as to create one or more supplementary light areas 6.

The dark areas 4, 4', 4" on the other hand are preferably provided by producing respective one or more hollows (i.e. concavities) in the mould cover 2, by way of mechanical deformation of the mould cover 2, for example by way of a die punching or pressing process. For example, in some embodiments, the mould cover 2 is deformed mechanically, in a known manner, by way of male/female molds made of metallic material (provided beforehand using numerically controlled machines) fitted on a die punching machine, so as to form adapted hollows which constitute the dark areas 4, 4', 4".

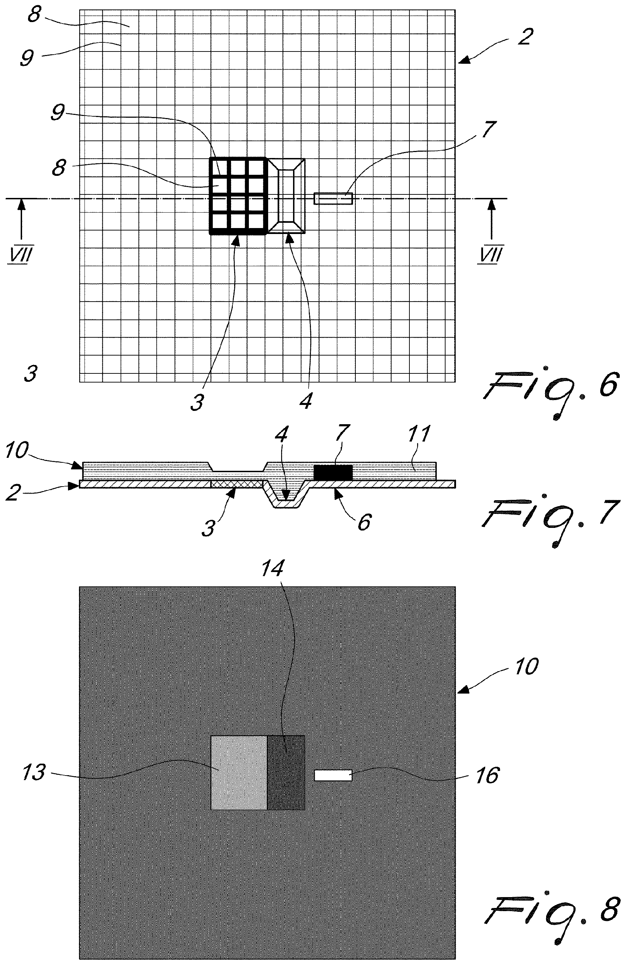

Figure 6 shows a mould cover 2 in which, in the step of forming the mould cover 2, the following have been provided: a light area 3 using an additive process as previously described; a dark area 4 comprising a hollow which is provided by way of mechanical deformation; and a supplementary light area 6 which is provided by way of application of an impermeable element 7.

Figure 7 shows the mould cover 2 of Figure 6, in cross-section, following the step of deposition of the fibers 11: note that a lesser quantity (thickness) of fibers 11 is deposited at the light area 3, that a greater quantity (thickness) of fibers 11 is deposited at the dark area 4, and that a minimal quantity (thickness) of fibers 11 is deposited at the supplementary light area 6.

Figure 8 is a plan view of the sheet of paper 10 obtained with the mould cover 2 of Figure 6: note that a light region 13, a dark region 14 and a supplementary light region 16 are produced respectively at the light area 3, at the dark area 4 and at the supplementary light area 6, forming a desired watermark.

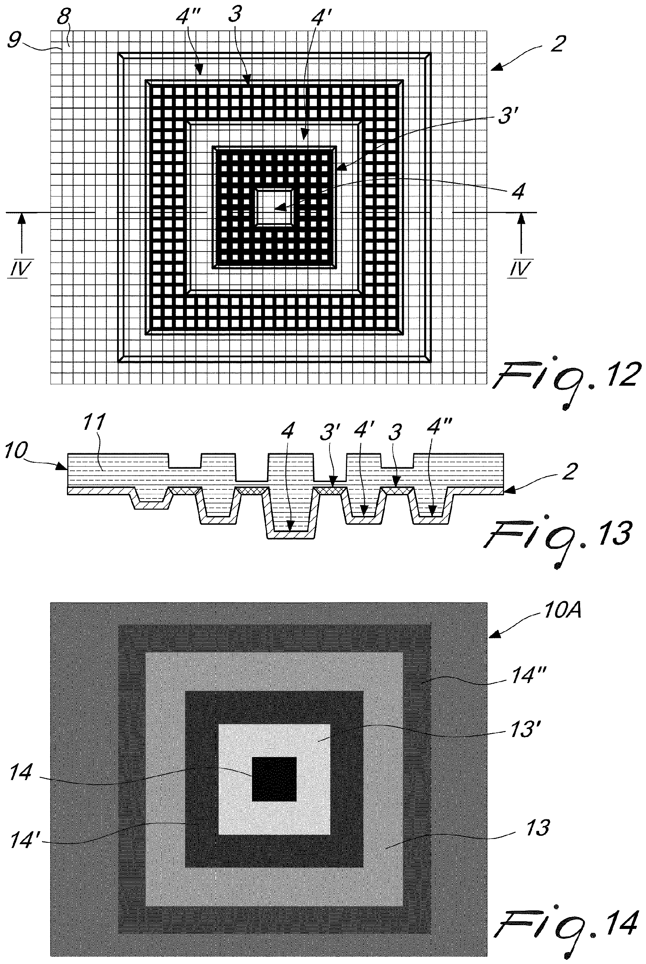

Preferably, in the step of forming the mould cover 2, the light areas 3, 3', 3", 3''' and the dark areas 4, 4', 4" are provided simultaneously, that is to say during a single process carried out on a single processing line, alternating the provision of one or more light areas 3, 3', 3", 3''' using the additive process with the provision of one or more dark areas 4, 4', 4", using mechanical deformation. The result of this advantageous embodiment is shown in Figures 12-14, in which the sharp separation between the light regions 13, 13' and the dark regions 14, 14' 14" is evident.

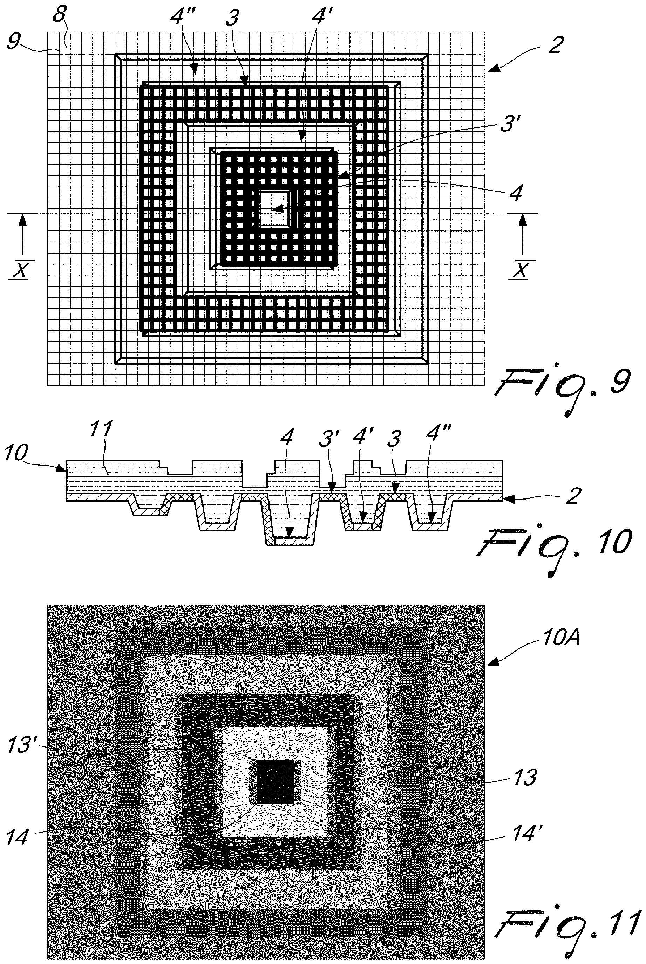

In more detail, in this embodiment, the light areas 3, 3' and the dark areas 4, 4', 4" within a mould cover 2 are provided so as to complete a single watermark (i.e. a single pattern), before proceeding to provide the light areas 3, 3', 3", 3''' and dark areas 4, 4', 4" of another watermark. In this manner, there is no need to reposition the mould cover 2 between the two different processes, thus preventing unwanted shifts in the light areas and of the dark areas 4 owing to possible deformations of the mould cover (such a shift is shown in Figures 9-11).

The step of forming the mould cover 2 is therefore carried out preferably by a processing line that comprises one or more mechanical moulding devices which are configured to provide, in the mould cover 2, the hollows that form the dark areas 4, 4', 4" and one or more devices for adding material (i.e. any conventional device that is configured to carry out, on a mould cover 2, one of the conventional additive processes described above, such as for example a 3D printer or the like).

The present invention also relates to an apparatus for manufacturing watermarked paper 10 according to the method described above.

In practice this apparatus comprises, at least in a configuration for deposition (i.e. when it is configured to execute the step of deposition), a mould cylinder covered with a mould cover 2 which is adapted to modulate the density of fibers 11 that are deposited on the mould cylinder so as to produce light regions 13, 13', 13" and dark regions 14, 14', 14" in the paper 10. Such mould cover 2 comprises light areas 3, 3', 3", 3'" which are adapted to produce the above mentioned light regions 13, 13', 13", 13''' in the paper 10 and dark areas 4, 4', 4" which are adapted to produce the above mentioned dark regions 14, 14', 14" in the paper 10.

According to the invention, the mould cover 2, in the light areas 3, 3', 3", 3''', is at least partially covered with one or more layers of additional material, which is fixed to a plurality of wires 9 of the mould cover 2, which reduce the size of a plurality of voids 8 formed between the suitably selected plurality of wires 9.

The rest of the apparatus is provided according to the known art and therefore, for the sake of brevity, it will not be further described .

It should only be noted that the dark areas 4, 4', 4" of the mould cover 2 preferably comprise adapted hollows of that mould cover 2.

Operation of the apparatus is clear and evident from the foregoing description.

It is to be noted in particular that, advantageously, since the light regions areas 3, 3', 3", 3''' are not in relief, the wires 9 of the mould cover 2 undergo less stretching during the step of forming the mould cover 2 and furthermore, since the light areas 3, 13', 13", 13''' do not protrude from the plane of the mould cover 2, they do not undergo abrasion during the production of the paper 10.

In practice it has been found that the method and the apparatus for manufacturing watermarked paper, according to the present invention, achieve the intended aim and objects in that they make it possible to lengthen the useful life of the mould cover.

Another advantage of the method and the apparatus for manufacturing watermarked paper, according to the invention, consists in overcoming the limitations of chromatic contrast and/or the limitations of the extent of light regions of the watermark, in the known art.

Another advantage of the method and the apparatus for manufacturing watermarked paper, according to the invention, consists in that they make it possible to improve the watermark produced in one or more visible aspects and to reduce defects in the watermarked paper produced.

Another advantage of the method and the apparatus for manufacturing watermarked paper, according to the invention, consists in that they are easy to implement and economically competitive when compared to the known art.

The method and the apparatus for manufacturing watermarked paper, thus conceived, are susceptible of numerous modifications and variations, all of which are within the scope of the appended claims.

Moreover, all the details may be substituted by other, technically equivalent elements.

The disclosures in Italian Patent Application No. 102019000014103 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing watermarked paper (10), comprising at least one watermark constituted by one or more light regions (13, 13', 13", 13''') which have a lower density of fibers (11) and one or more dark regions (14, 14', 14") which have a higher density of fibers (11), by way of at least one mould cylinder covered with a mould cover (2) which comprises wires (9) which define voids (8) between them and which is adapted to modulate the density of fibers (11) that are deposited on the mould cylinder, so as to produce said light regions (13, 13', 13", 13''') and said dark regions (14, 14', 14") in the paper, which comprises:
- a step of forming the mould cover (2), in which one or more light areas (3, 3', 3", 3"') adapted to produce said light regions (13, 13', 13", 13''') in the paper and one or more dark areas (4, 4', 4") adapted to produce said dark regions (14, 14', 14") in the paper are produced in said mould cover (2);
- a step of deposition, in which the fibers (11) are deposited on said mould cylinder covered with said mould cover (2) which was formed previously in said step of forming the mould cover (2), so as to provide said watermarked paper (10);
**characterized in that**, during said step of forming the mould cover (2), said one or more light areas (3, 3', 3", 3''') are provided by locally modifying the permeability of the mould cover (2) by way of an additive process through which material is added to a plurality of said wires (9) of the mould cover (2), thus reducing the size of a plurality of voids (8) that are defined between said plurality of wires (9).

2. The method according to claim 1, **characterized in that** said additive process comprises a 3D printing method, with which one or more layers of material are added to said plurality of wires (9) of said mould cover (2).

3. The method according to claim 1 or 2, **characterized in that** said additive process comprises a method chosen from among the following group:
- direct laser sintering;
- selective laser melting;
- selective laser sintering;
- metal sintering by electron beam melting;
- extrusion of materials, in particular filament extrusion;
- polymerization using light;
- multi-jet modeling;
- deposition of liquid photopolymers.

4. The method according to one or more of the preceding claims, **characterized in that**, in said step of forming the mould cover, at least part of said one or more dark areas (4, 4', 4") are provided by producing one or more respective hollows in the mould cover (2) by mechanical deformation of the mould cover (2).

5. The method according to one or more of the preceding claims, **characterized in that**, in said step of forming the mould cover, one or more impermeable elements (7) are fixed to said mould cover (2) so as to create one or more supplementary light areas (6).

6. The method according to one or more of the preceding claims, **characterized in that**, in said step of forming the mould cover, said light areas (3, 3', 3", 3''') and said dark areas (4, 4', 4") are provided simultaneously by alternating the provision of one or more light areas (3, 3', 3", 3''') by way of said additive process and the provision of one or more dark areas (4, 4', 4").

7. A processing line for providing a step of forming the mould cover (2), which comprises one or more mechanical moulding devices which are configured to provide, in a mould cover (2), preset hollows which form dark areas (4, 4', 4") and at least one device for adding material which is configured to carry out, on said mould cover (2), said additive process in order to provide one or more light areas (3, 3', 3", 3''').

8. An apparatus for manufacturing watermarked paper, which comprises a mould cylinder which, at least in a configuration for deposition, is covered with a mould cover (2) which is adapted to modulate the density of fibers (11) that are deposited on the mould cylinder so as to produce (10) light regions (13, 13', 13", 13''') and dark regions (14, 14', 14") in the paper; said mould cover (2) comprising light areas (3, 3', 3", 3''') adapted to produce (10) said light regions (13, 13', 13", 13''') in the paper, and dark areas (4, 4', 4") adapted to produce said dark regions (14, 14', 14") in the paper;
**characterized in that** said mould cover (2), in said light areas (3, 3', 3", 3'''), is at least partially covered with one or more layers of additional material, which is fixed to a plurality of wires (9) of the mould cover (2), which reduce the size of a plurality of voids (8) formed between said plurality of wires (9).

9. The apparatus according to claim 8, **characterized in that** said dark areas (4, 4', 4") of the mould cover (2) comprise hollows of said mould cover (2).

10. The apparatus according to claim 8, **characterized in that** said mould cover (2) comprises one or more supplementary light areas (16), each one of which comprises at least one impermeable element (7) which is fixed to said mould cover (2).
